# EUROPÄISCHE PATENTSCHRIFT

(11) **EP 1 153 686 B1**
(45) Veröffentlichungstag und Bekanntmachung des Hinweises auf die Patenterteilung: **13.09.2006**
(21) Anmeldenummer: 01104679.4
(22) Anmeldetag: 24.02.2001
(51) Int. Cl.: B23D 31/00

(54) **Verfahren zur Bruchtrennung in Bauteilen oder deren Vormaterial**
Method for deviding constructing parts by breaking
Méthode pour diviser des éléments de construction par cassage

(30) Priorität: 10.05.2000 DE 10022884
(43) Veröffentlichungstag der Anmeldung: 14.11.2001
(73) Patentinhaber: MAN NUTZFAHRZEUGE AG, 80995 München (DE)
(72) Erfinder: Müller, Hans, Dipl.-Ing., 91077 Dormitz (DE)

(56) Entgegenhaltungen:
- US-A- 3 818 577
- US-A- 4 821 386

## Beschreibung

Die Erfindung bezieht sich auf ein Verfahren gemäß dem Gattungsbegriff des Patentanspruches 1.

Zur Bruchtrennung von Bauteilen ist es allgemein bekannt, die zu trennenden Bauteile in den Randbereichen der Bruchtopographie mit Starterkerben zu versehen. Ein derartiges Verfahren ist aber nur bei spröden Materialien anwendbar. Im Maschinenbau ist es aber wünschenswert, dass das Bauteil aus duktilem Metall ausgebildet ist, um Sprödbruch zu vermeiden. Diese gegenläufigen Forderungen sind ohne zusätzliche Maßnahmen nicht zu erfüllen.

Aus der US-A-3818575 ist ein Verfahren bekannt, das bei zähen Stählen vorsieht, das Material in einem schmalen Bereich, der die spätere Bruchebene mit umfasst, durch bestrahlen mit einem Elektronenstrahl auf die Austenitisierungstemperatur zu erwärmen und ausgehend von dieser Temperatur abzuschrecken, so dass sich in dem so behandelten Bereich eine Versprödung des Werkstoffes einstellt. Weiter ist dort beschrieben, den Elektronenstrahl entlang einer wellenförmigen Linie zu führen, um eine wellenförmige Bruchlinie zu erzeugen, so dass nach dem Fügen parallel zur Trennebene auftretende Querkräfte besser aufgenommen werden.

In ähnlicher Weise ist nach der US-A-4821386 bei gehärteten Wälzlagern vorgesehen, die Wälzlagerringe mittels einer energiereichen Strahlung auf der jeweils der Lauffläche abgewandten Seite lokal zu bestrahlen, so dass eine extreme Versprödung eintritt, die gleich einer "inneren Kerbe" wirkt, wodurch der jeweilige Wälzlagerring entlang dieser Linie unter Einwirkung einer äußeren Kraft gesprengt werden kann. Auch hier kann der energiereiche Strahl entlang einer bogenförmigen Linie geführt sein, so dass sich eine bogenförmige Bruchlinie ergibt, die auftretende Axialkräfte besser aufnimmt.

Der Erfindung liegt die Aufgabe zu Grunde, ein Werkstück auch aus duktilem Metall bruchtrennfähig zu machen, bei spröden Metallen eine stärkere Versprödung zur Herabsetzung der Bruchtrennkraft zu erreichen und den Bruchfortgang durch eine vorgegebene Topographie festzulegen.

Gelöst wird diese Aufgabe durch die kennzeichnenden Merkmale des Patentanspruches 1.

Mit dem erfindungsgemäßen Verfahren können besonders Werkstücke aus duktilen Metallen bruchgetrennt werden, wodurch extra spröde, bruchtrennfähige Werkstoffe nicht mehr benötigt werden und zudem Werkstücke die aus duktilen Metallen gefertigt werden müssen, wie etwa Fahrwerksteile, der Bruchtrenntechnologie zugänglich sind.

Werkstücke aus spröden Metallen werden durch die erfinderischen Vorgaben noch stärker versprödet, wodurch die Bruchtrennkräfte minimiert werden und teure leistungsstarke Bruchtrennmaschinen durch preisgünstigere leistungsschwächere Bruchtrennmaschinen ersetzt werden können. Die Kostenminimierung ist besonders wichtig bei der Herstellung von Massenprodukten, wie es im Fahrzeugbau der Fall ist.

Das erfindungsgemäße Verfahren sieht eine Wärmebehandlung vor, bei der bei ausscheidungshärtenden Legierungen ein Lösungsglühvorgang durch lokales Aufschmelzen im Bereich der vorgesehenen Bruchtopographie erfolgt und die weitere Wärmebehandlung durch konventionelles Abschrecken bzw. Selbstabschrecken und Auslagern erfolgt.

Die Ansprüche 5 und 6 enthalten Verfahrensschritte für die Vor- bzw. Nachbehandlung von Werkstücken im Ofen.

Das erfindungsgemäße Verfahren erlaubt es, Bauteile aus duktilem ausscheidungshärtenden Legierungen der Bruchtrennung zugänglich zu machen. Im Maschinenbau ist es erwünscht ganze Bauteile aus duktilem Metall zu fertigen, um spontane Brüche zu vermeiden. Erfindungsgemäß wird daher nur die Zone, in der die Bruchtopographie verlaufen soll, durch den Lösungsglühvorgang versprödet, während das übrige Bauteil seine Eigenschaften behält.

Bei Bauteilen, welche bereits aus spröderen Werkstoffen gefertigt werden, kann durch das erfindungsgemäße Verfahren der Arbeitsaufwand für die Bruchtrennung verringert werden.

Um den Bruch gezielt einzuleiten, können Starterkerben vorgesehen sein. Werkstücke die bereits aufgrund ihrer Formgebung Einschnürungen aufweisen bedürfen dieser Starterkerben nicht unbedingt. Dies gilt auch für Materialien die durch die Wärmebehandlung stark verspröden.

Die in den Ansprüchen 2 und 3 angesprochene geometrische Formgebung und ein Pleuel als Beispiel für die Bruchtrennung an einem Bauteil aus duktilem Werkstoff soll an Hand der Zeichnungen erläutert werden.

Das erfindungsgemäße Verfahren wird nachfolgend an Hand von Anwendungsbeispielen erläutert. Es zeigt:
- Fig. 1: Bruchtrennen eines Stabes durch Zug, bei dem der Stab auf Biegung beansprucht wird
- Fig. 2: Bruchtrennen eines Stabes durch Zug quer zur Stabachse, bei dem der Stab auf Zug beansprucht wird
- Fig. 3: Bruchtrennen eines Stabes durch Zug, bei dem der Stab auf Torsion beansprucht wird
- Fig. 4: Bruchtrennen eines Stabes durch Torsion, bei dem der Stab auf Torsion beansprucht wird
- Fig. 5: eine Vorbereitung zum Bruchtrennen eines Pleuelkopfes durch Abschrecken aus der Schmiedehitze mittels Wasserstrahl
- Fig. 6: eine Vorbereitung zum Bruchtrennen eines Lagerdeckels vom Lagerstuhl durch Aufschmelzen und Abkühlen

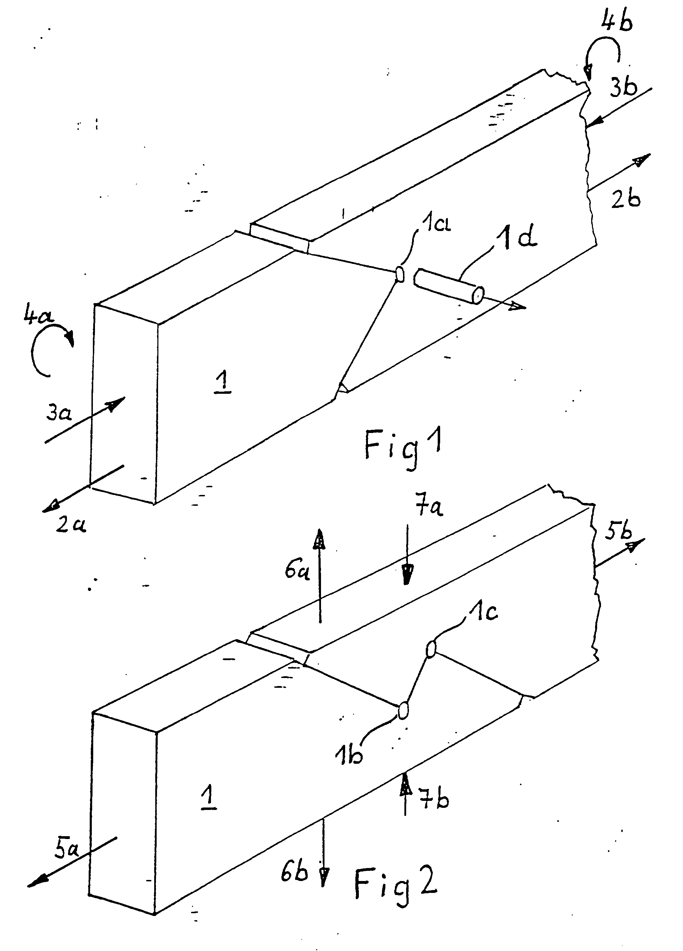

Figur 1 zeigt einen Stab 1, welcher durch Zugbelastung 2a, 2b bei der Bruchtrennung die angegebene Bruchform annimmt. Nach einer durch Wärmebehandlung hervorgerufenen Versprödung erfolgt der Bruch unter 45°, also in Ebenen mit höchster Schubspannung. Es können selbstverständlich auch andere Winkel der Bruchtrennung erreicht werden, wenn die Lage der Versprödungsbereiche dementsprechend gewählt wird. Der Rißfortgang in Bereiche in denen Risse nicht erünscht sind, wird durch Rißstopper 1a verhindert. Rißstopper sind Bauteilbereiche in denen kein Material vorhanden ist, oder in denen Material durch Bohrung vor dem Bruchtrennen entfernt wurde, oder in denen anderes Material 1b das den Riß nicht weiterlaufen läßt, eingebracht ist. Die Einbringung des Material 1b erfolgt durch Eingießen, wobei das einzugießende Material vorher zur Trennung mit Schlichte bestrichen wird. Nach dem Fügen kann der Stab, wenn er durch Schrauben oder dergleichen einer axialen Druckspannung 3a, 3b unterworfen wird der Aufnahme von Biegemomenten 4a, 4b dienen.

Fig. 2 zeigt ein Bauteil 1, welches nach dem Fügen auf Zug 5a, 5b belastbar ist. In diesem Fall ist es günstig, die Bruchtrennung durch eine Zugbelastung 6a, 6b quer zur Längsrichtung herbeizuführen. Die sich einstellende Bruchtopographie ist aus der Figur zu ersehen und verläuft wiederum längs einer Zone höchster Schubspannung unter 45°. Wie schon unter Fig. 1 beschrieben können wieder Rißstopper 1b, 1c angeordnet oder eingebracht werden. Beim Verspannen der getrennten Teile mittels Druckkräften 7a, 7b quer zur Längsrichtung können die Teile durch Formschluß in der durch Pfeile 5a, 5b angegebenen Richtung hohe Zugkräfte übertragen.

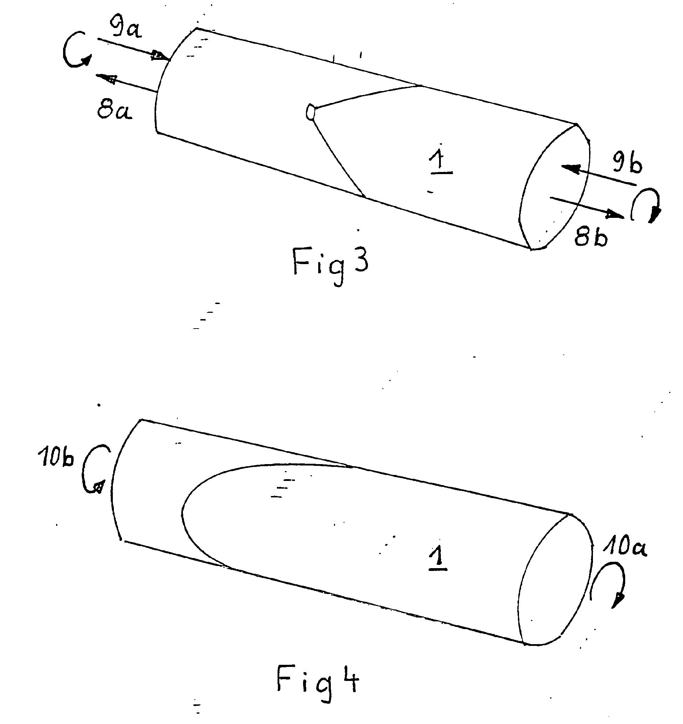

Gemäß Fig. 3 wird das Bauteil 1 durch Axialkräfte 8a, 8b getrennt. Der Verlauf der Bruchtopographie folgt wie dargestellt der Zone höchster Schubspannung. Nach dem Fügen kann das Bauteil 1 durch Formschluß ein hohes Drehmoment übertragen, wenn durch axiale Druckkräfte 9a, 9b gemäß Pfeilrichtung ein axiales Verschieben verhindert wird.

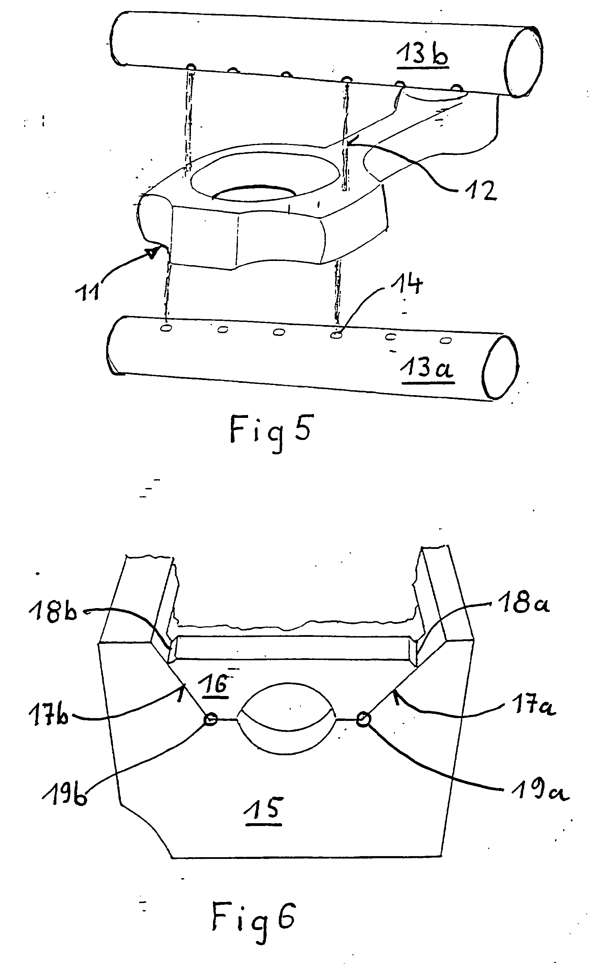

Nach Fig. 4 erfolgt die Bruchtrennung mittels durch Pfeil angedeuteter Drehmomente 10a, 10b. Die Richtung höchster Schubbeanspruchung liegt wie gezeichnet unter 45° zur Achsrichtung. Das Bauteil 1 kann bei radialer und axialer Führung ein hohes Drehmoment übertragen.

Besonders vorteilhaft ist das erfindungsgemäße Verfahren bei der Bruchtrennung von Pleuelstangen für Brennkraftmaschinen anwendbar. Das gesamte Pleuel kann aus duktilem Ausgangsmaterial durch Schmieden hergestellt werden.

Wie Fig. 5 zeigt, wird der noch glühende Schmiederohling 11 lokal durch Wasserstrahlen 12 abgekühlt und dadurch versprödet. Nach der Versprödung kann der Pleuelkopf getrennt werden. Das restliche Pleuel verbleibt im ursprünglichen duktilen Gefüge.

Wie gezeigt kann die Abkühlung durch Wasserstrahlen 12 erfolgen. Die Zuleitung des Wassers erfolgt mittels der Rohre 13a, 13b. Diese weisen in dem Bereich, in dem die Versprödung erreicht werden soll Düsenbohrungen 14 auf, welche die Wasserstrahlen 12 gegen das Bauteil zur gezielten lokalen Abkühlung richten. Nach dieser Behandlung kann der Pleuelkopf nach Erkalten durch Bruchtrennung gespalten werden.

Fig. 6 zeigt eine weitere Anwendungsmöglichkeit am Beispiel einer Kurbelwellenlage rung aus Gußeisen. Diese besteht aus einem Lagerstuhl 15 der fest mit einem Kurbelgehäuse verbunden ist und einem Lagerdeckel 16. Der Lagerdeckel 16 wird mit Bruchtrennen vom Lagerstuhl 15 getrennt. Zu diesem Zweck werden die Trennebenen 17a, 17b aufgeschmolzen, so daß bei nachfolgender Abkühlung der spröde Ledeburit entsteht. Durch den Ledeburit versprödet diese Schmelzzone, so daß der Lagerdeckel 16 mit geringem Kraftaufwand abgetrennt werden kann. Zur Einleitung des Bruches können Starterkerben 18a, 18b vorgesehen werden. Vorteilhaft ist die Anwendung von Rißstoppern 19a, 19b.

## Patentansprüche

1. Verfahren zur Bruchtrennung in Bauteilen oder deren Vormaterial, insbesondere bei Verwendung duktiler Metalle, wobei nur im Bereich der Bruchtrennung durch eine örtlich begrenzte Wärmebehandlung eine Versprödung gegenüber dem unbehandelten Bauteil herbeigeführt wird, derart, daß sich die Zone der Versprödung über einen größten Teil einer, für die sichere Fügung der bruchgetrennten Bauteile notwendigen Bruchtopographie erstreckt, **dadurch gekennzeichnet, dass** bei ausscheidungshärtenden Legierungen ein Lösungsglühvorgang durch lokales Aufschmelzen im Bereich der vorgesehenen Bruchtopographie erfolgt und die weitere Wärmebehandlung durch konventionelles Abschrecken bzw. Selbstabschrecken und Auslagern erfolgt.

2. Verfahren nach Anspruch 1, **dadurch gekennzeichnet, daß** der Bruchtopographiebereich durch entsprechende geometrische Ausbildung der bruchtrennfähigen Bereiche um konstruktive Schwachstellen des Werkstückes herumgelenkt wird.

3. Verfahren nach Anspruch 1, **dadurch gekennzeichnet, daß** der Bruchtopographiebereich durch entsprechende geometrische Ausbildung der bruchtrennfähigen Bereiche so gestaltet wird, daß örtliche mechanische Belastungen durch vergrößerten Formschluß verringert werden, insbesondere bei Biegung durch Hinterschneidung und bei Torsionsbelastung bei Wellen und Rohren durch wellenförmiges oder sägezahnähnliches Profil.

4. Verfahren nach Anspruch 1, **dadurch gekennzeichnet, daß** die Wärmebehandlung durch Elektronenstrahl erfolgt.

5. Verfahren nach einem der vorhergehenden Ansprüche, **dadurch gekennzeichnet, daß** die erzeugten bruchtrennfähigen Werkstoffbereiche noch vor dem Trennen eine Anlaßbehandlung über Wärmeeinbringung im Ofen erhalten.

6. Verfahren nach einem der vorhergehenden Ansprüche,**dadurch gekennzeichnet, daß** die erzeugten bruchtrennfähigen Werkstoffbereiche nach dem Trennen eine Anlaßbehandlung über Wärmeeinbringung im Ofen erhalten.

## Claims

1. A method for the fracture division of components or their starting material, especially when ductile metals are used, wherein, by means of locally limited heat treatment, embrittlement in relation to the untreated component is produced only in the region of the fracture division in such a way that the embrittled zone extends over a largest part of a fracture topography necessary for securely joining the fracture-divided components, **characterised in that**, in the case of precipitation-hardening alloys, a solution annealing process is carried out by local melting in the region of the intended fracture topography, and the further heat treatment is carried out by conventional quenching or self-quenching and ageing.

2. A method according to claim 1, **characterised in that** the fracture topography region is guided around structural weak points in the workpiece by appropriate geometric formation of the fracture-divisible regions.

3. A method according to claim 1, **characterised in that** the fracture topography region is configured by appropriate geometric formation of the fracture-divisible regions so that local mechanical stresses are reduced by increased positive engagement, especially by undercutting in the case of bending and by an undulating or sawtooth-like profile in the case of torsional stress in shafts and pipes.

4. A method according to claim 1, **characterised in that** the heat treatment is carried out by an electron beam.

5. A method according to any one of the preceding claims, **characterised in that** the fracture-divisible material regions produced undergo tempering treatment by the application of heat in a furnace before division.

6. A method according to any one of the preceding claims, **characterised in that** the fracture-divisible material regions produced undergo tempering treatment by the application of heat in a furnace after division.

## Revendications

1. Procédé de division par rupture dans des composants ou dans la matière brute de ceux-ci, en particulier si on utilise des métaux ductiles, une fragilisation par rapport au composant non traité étant provoquée par un traitement thermique limité localement uniquement dans la zone de la division par rupture, de sorte que la zone de la fragilisation s'étend sur une majeure partie d'une topographie de rupture nécessaire pour l'assemblage sûr des composants séparés par rupture,
**caractérisé en ce que**
pour des alliages durcissant par précipitation on effectue un processus de traitement thermique de mise en solution par fusion locale dans la zone de la topographie de rupture prévue, la suite du traitement thermique s'effectuant par trempe conventionnelle ou trempe automatique ou par traitement de désursaturation.

2. Procédé selon la revendication 1,
**caractérisé en ce que**
la zone de la topographie de rupture est orientée autour de points faibles de la construction de la pièce, grâce à une configuration géométrique appropriée des zones à séparer par rupture.

3. Procédé selon la revendication 1,
**caractérisé en ce que**
la zone de la topographie de rupture est conçue grâce à une configuration géométrique appropriée des zones à séparer par rupture, de sorte que des sollicitations mécaniques locales sont diminuées par une complémentarité de formes améliorée, en particulier en cas de flexion par contre-dépouille et de sollicitation de torsion d'arbres et de tubes par un profil ondulé ou en dents de scie.

4. Procédé selon la revendication 1,
**caractérisé en ce qu'**
on effectue le traitement thermique par faisceau d'électrons.

5. Procédé selon l'une quelconque des revendications précédentes,
**caractérisé en ce que**
les zones de matériau à séparer par rupture générées reçoivent encore avant la division un traitement de revenu par apport de chaleur dans un four.

6. Procédé selon l'une quelconque des revendications précédentes,
**caractérisé en ce que**
les zones de matériau à séparer par rupture générées reçoivent après la division un traitement de revenu par apport de chaleur dans un four.
